# EUROPÄISCHE PATENTANMELDUNG

(11) **EP 4 431 251 A1**
(43) Veröffentlichungstag der Anmeldung: **18.09.2024**
(21) Anmeldenummer: 24159838.2
(22) Anmeldetag: 27.02.2024
(51) Int. Cl.: B25J 11/00, B25J 15/00

(54) **GREIFERANORDNUNG MIT ANPASSBAREM ABWURFVERHALTEN**

(30) Priorität: 17.03.2023 DE 102023106778
(71) Anmelder: MULTIVAC Sepp Haggenmüller SE & Co. KG, 87787 Wolfertschwenden (DE)
(72) Erfinder: König, Johannes, 89601 Schelklingen (DE); Müller, Thomas, 87779 Trunkelsberg (DE)
(74) Vertreter: Grünecker Patent- und Rechtsanwälte PartG mbB

(57) **Zusammenfassung**

Eine Greiferanordnung (3) umfasst einen Hauptkörper (13), eine Halteeinrichtung (33), ein Strukturelement (15) und ein Band (25). Das Strukturelement (15) weist eine erste Kante (18) und eine zweite Kante (19) auf. Das Band (25) erstreckt sich um die erste Kante (18) und die zweite Kante (19) herum und bildet so ein Obertrum (27), welches eine Tragefläche (29) zur Aufnahme eines Produkts (11) bereitstellt. Das Strukturelement (15) ist entlang einer relativ zu dem Hauptkörper (15) definierten Arbeitsachse (17) beweglich an dem Hauptkörper (15) angebracht. Die Halteeinrichtung (33) ist dazu konfiguriert, einen Bereich des Bandes (25) festzuhalten, so dass eine Bewegung des Strukturelements (15) entlang der Arbeitsachse (17) zu einem Umlaufen des Bandes (25) um die erste Kante (18) und die zweite Kante (19) führt. Die Greiferanordnung (3) ist dazu konfiguriert, in eine erste Konfiguration gebracht zu werden, in welcher bei einer Bewegung des Strukturelements (15) entlang der Arbeitsachse (17) ein das Obertrum (27) bildender Bereich des Bandes (25) keine Bewegung entlang der Arbeitsachse (17) ausführt. Die Greiferanordnung (3) ist dazu konfiguriert, in eine zweite Konfiguration gebracht zu werden, in welcher bei einer Bewegung des Strukturelements (15) entlang der Arbeitsachse (17) ein das Obertrum (27) bildender Bereich des Bandes (25) eine Bewegung entlang der Arbeitsachse (17) ausführt.

## Beschreibung

Die Erfindung betrifft das Gebiet der Greiferanordnungen zum Handhaben von Produkten, insbesondere zum Handhaben von Lebensmittelprodukten.

Die EP 1 986 941 B1 offenbart eine Pick-and-place-Vorrichtung zum Aufnehmen und Neupositionieren eines von einer Stützfläche getragenen Artikels. Die Vorrichtung umfasst einen ersten Teil mit einem Plattenabschnitt, der parallel zu der Stützfläche beweglich ist, sodass ein vorderer Rand des Plattenabschnitts zwischen den Artikel und die Stützfläche eindringt. Zudem umfasst die Vorrichtung ein Band aus einem flexiblen Material. Das Band ist um mindestens den vorderen Rand des Plattenabschnitts gewickelt, sodass es zwischen der Platte und dem Artikel liegt, wenn die Platte darunter eindringt.

Die EP 1 685 045 B2 offenbart ein Werkzeug zum Aufnehmen von Nahrungsmitteln von einem Förderband. Das Werkzeug umfasst zwei Blätter, die zwischen einer ersten Position und einer zweiten Position bewegbar sind. In der ersten Position sind Vorderkanten der Blätter durch einen großen Spalt getrennt. In der zweiten Position überlappen sich die Vorderkanten oder stehen miteinander in Kontakt oder sind durch einen kleineren Spalt getrennt. Das Werkzeug kann insgesamt um eine vertikale Achse gedreht werden, um das Produkt zu drehen.

Die EP 4 059 672 A1 offenbart eine Greiferanordnung zur Anbringung an einer Robotereinrichtung. Die Greiferanordnung umfasst eine erste Backe und eine zweite Backe, die relativ zueinander von einer Greifposition in eine offene Position bewegbar sind. Zum Freigeben des Nahrungsmittelprodukts wird die erste Backe relativ zu der zweiten Backe von der Greifposition in die offene Position bewegt, sodass eine Seite des Nahrungsmittelprodukts nicht von der ersten Backe gestützt wird, während eine andere Seite des Nahrungsmittelprodukts zeitweise auf der zweiten Backe ruht, sodass sich ein Kippen des Nahrungsmittelprodukts um eine Längsachse des Nahrungsmittelprodukts ergibt.

Es ist Aufgabe der Erfindung, einen verbesserten Weg zum Handhaben von Produkten mit einer Greiferanordnung anzugeben.

Gemäß einem ersten Aspekt der Erfindung wird eine Greiferanordnung bereitgestellt. Die Greiferanordnung umfasst einen Hauptkörper, eine Halteeinrichtung, ein Strukturelement und ein Band. Das Strukturelement weist eine erste Kante und eine zweite Kante auf. Das Band erstreckt sich um die erste Kante und die zweite Kante herum und bildet so ein Obertrum. Das Obertrum stellt eine Tragefläche zur Aufnahme eines Produkts bereit. Das Strukturelement ist an dem Hauptkörper entlang einer relativ zu dem Hauptkörper definierten Arbeitsachse beweglich angebracht. Die Halteeinrichtung ist dazu konfiguriert, einen Bereich des Bandes festzuhalten, sodass eine Bewegung des Strukturelements entlang der Arbeitsachse zu einem Umlaufen des Bandes um die erste Kante und die zweite Kante führt. Die Greiferanordnung ist dazu konfiguriert, in eine erste Konfiguration gebracht zu werden. In der ersten Konfiguration führt ein das Obertrum bildender Bereich des Bandes bei einer Bewegung des Strukturelements entlang der Arbeitsachse keine Bewegung entlang der Arbeitsachse aus. Die Greiferanordnung ist dazu konfiguriert, in eine zweite Konfiguration gebracht zu werden. In der zweiten Konfiguration führt ein das Obertrum bildender Bereich des Bandes bei einer Bewegung des Strukturelements entlang der Arbeitsachse eine Bewegung entlang der Arbeitsachse aus.

Die Greiferanordnung kann dazu konfiguriert sein, an einem Aufnahmeort ein Produkt aufzunehmen, sodass das Produkt auf der Tragefläche aufgenommen wird. Die Greiferanordnung kann dazu konfiguriert sein, mit dem auf der Tragefläche aufgenommenen Produkt an einen Abgabeort verfahren zu werden. Die Greiferanordnung kann dazu konfiguriert sein, das an dem Abgabeort abzugeben.

Das Band kann zwischen einem auf der Tragefläche aufgenommenen Produkt und dem Strukturelement liegen. Das Band kann eine geeignete Oberfläche zur Aufnahme des Produkts bereitstellen.

Durch ein Festhalten eines Bereichs des Bandes durch die Halteeinrichtung kann bei einer Bewegung des Strukturelements entlang der Arbeitsachse ein Umlaufen des Bandes um die erste Kante und die zweite Kante erreicht werden, ohne dass ein separater Antrieb für das Band vorhanden ist. Die Halteeinrichtung kann dazu konfiguriert sein, den Bereich des Bandes relativ zu dem Hauptkörper festzuhalten.

In der ersten Konfiguration kann durch eine Bewegung des Strukturelements entlang der Arbeitsachse eine Position des Obertrums entlang der Arbeitsachse verschoben werden. Dies erfolgt aber ohne, dass ein das Obertrum bildender Bereich des Bandes eine Bewegung entlang der Arbeitsachse ausführt. In der ersten Konfiguration der Greiferanordnung kann durch eine Bewegung des Strukturelements entlang der Arbeitsachse das Band unter einem auf der Tragefläche liegenden Produkt entlang der Arbeitsachse verschoben werden, ohne dass sich eine Absolutposition des Produkts im Raum ändert.

In der ersten Konfiguration kann durch eine Bewegung des Strukturelements entlang der Arbeitsachse das Band unter das Produkt geschoben werden, ohne dass das Produkt auf dem Band eine Gleitbewegung entlang der Arbeitsachse ausführt. Das Produkt kann in der ersten Konfiguration der Greiferanordnung reibungsreduziert auf der Tragefläche aufgenommen werden. In der ersten Konfiguration kann das Produkt mit einem verringerten Risiko einer Beschädigung des Produkts auf der Tragefläche aufgenommen werden.

In der ersten Konfiguration kann durch eine Bewegung des Strukturelements entlang der Arbeitsachse das Band unter dem Produkt weggezogen werden, ohne dass das Produkt auf dem Band eine Gleitbewegung ausführt. Hierdurch kann das Produkt reibungsreduziert und schonend abgegeben werden.

In der zweiten Konfiguration der Greiferanordnung kann durch eine Bewegung des Strukturelements entlang der Arbeitsachse eine Position des Obertrums entlang der Arbeitsachse verschoben werden. Hierbei führt ein das Obertrum bildender Bereich des Bandes eine Bewegung entlang der Arbeitsachse aus.

In der zweiten Konfiguration kann ein das Obertrum bildender Bereich des Bandes bei einer Bewegung des Strukturelements entlang der Arbeitsachse zusammen mit einem auf der Tragefläche liegenden Produkt eine Bewegung entlang der Arbeitsachse ausführen. Das auf der Tragefläche liegende Produkt kann in der zweiten Konfiguration bei einer Bewegung des Strukturelements entlang der Arbeitsachse entlang der Arbeitsachse im Raum bewegt werden. In der zweiten Konfiguration der Greiferanordnung kann durch ein Bewegen des Strukturelements entlang der Arbeitsachse dem Produkt eine Bewegung entlang der Arbeitsachse aufgeprägt werden.

Die Greiferanordnung kann wahlweise in die erste Konfiguration oder in die zweite Konfiguration gebracht werden. Hierdurch ist ein Umschalten zwischen zwei Betriebsmodi der Greiferanordnung möglich. Der Betriebsmodus der Greiferanordnung kann je nach einer durchzuführenden Aktion angepasst werden, wodurch die Greiferanordnung optimiert betrieben werden kann.

Die erste Kante und die zweite Kante können zueinander parallel verlaufen. Die erste Kante und die zweite Kante können zu der Arbeitsachse senkrecht verlaufen. Die erste Achse kann in einer horizontalen Ebene verlaufen. Die zweite Achse kann in einer horizontalen Ebene verlaufen.

Die Greiferanordnung kann dazu konfiguriert sein, an einer Robotereinrichtung angebracht zu werden. Die Robotereinrichtung kann dazu konfiguriert sein, die Greiferanordnung zu bewegen, insbesondere von einem Aufnahmeort zu einem Abgabeort zu bewegen. Die Greiferanordnung kann eine Kopplungseinrichtung zur Anbringung an der Robotereinrichtung umfassen. Die Kopplungseinrichtung kann in Bezug auf den Hauptkörper der Greiferanordnung stationär sein. Die Kopplungseinrichtung kann an dem Hauptkörper der Greiferanordnung angebracht sein.

Die Halteeinrichtung kann dazu konfiguriert sein, das Band an einer Halteposition entlang einer Umlaufrichtung des Bandes um die erste Kante und die zweite Kante festzuhalten. Die Halteeinrichtung kann dazu konfiguriert sein, das Band entlang einer Halteachse festzuhalten, welche senkrecht zu der Arbeitsachse steht. Die Halteachse kann senkrecht zu einer Umlaufrichtung des Bands um die erste Kante und die zweite Kante stehen. Die Halteachse kann sich entlang einer Breitenrichtung des Bandes erstrecken.

Die Halteeinrichtung kann dazu konfiguriert sein, in der ersten Konfiguration einen Bereich des Obertrums festzuhalten. In der ersten Konfiguration kann der von der Halteeinrichtung festgehaltene Bereich des Bandes ein Bereich des Obertrums sein. Die Halteeinrichtung kann dazu konfiguriert sein, in der ersten Konfiguration einen Bereich des Obertrums relativ zu dem Hauptkörper festzuhalten. In der ersten Konfiguration kann die Halteachse an dem Obertrum angeordnet sein.

Die Halteeinrichtung kann dazu konfiguriert sein, in der zweiten Konfiguration einen Bereich eines Untertrums des Bandes festzuhalten. In der zweiten Konfiguration kann der von der Halteeinrichtung festgehaltene Bereich des Bandes ein Bereich des Untertrums sein. Die Halteeinrichtung kann dazu konfiguriert sein, in der zweiten Konfiguration einen Bereich des Untertrums relativ zu dem Hauptkörper festzuhalten. In der zweiten Konfiguration kann die Halteachse an dem Untertrum angeordnet sein.

Die Halteeinrichtung kann an dem Hauptkörper zwischen einer ersten Halteposition und einer zweiten Halteposition verstellbar angebracht sein. Durch Verstellen der Halteeinrichtung zwischen der ersten Halteposition und der zweiten Halteposition kann die Greiferanordnung zwischen der ersten Konfiguration und der zweiten Konfiguration verstellbar sein. Wenn sich die Halteeinrichtung in der ersten Halteposition befindet, kann die Greiferanordnung in der ersten Konfiguration sein. Wenn sich die Halteeinrichtung in der zweiten Halteposition befindet, kann die Greiferanordnung in der zweiten Konfiguration sein. Die erste Halteposition und die zweite Halteposition können in Bezug auf den Hauptkörper definiert sein.

Die Greiferanordnung kann einen Halteeinrichtungsantrieb umfassen, welcher dazu konfiguriert ist, die Halteeinrichtung an dem Hauptkörper zwischen der ersten Halteposition und der zweiten Halteposition zu verstellen. Der Halteeinrichtungsantrieb kann einen Linearantrieb umfassen. Der Linearantrieb kann beispielsweise einen Pneumatikzylinder oder einen Linearmotor, insbesondere einen Servo-Linearmotor, umfassen. Zum Verstellen zwischen der ersten Halteposition und der zweiten Halteposition kann die Halteeinrichtung entlang einer Achse verstellt werden, welche senkrecht zu der Arbeitsachse steht. Zum Verstellen der Halteeinrichtung zwischen der ersten Halteposition und der zweiten Halteposition kann die Halteeinrichtung entlang einer zumindest im Wesentlichen vertikalen Achse verstellt werden.

Das Band kann beispielsweise durch eine oder mehrere Schlaufen mit der Halteeinrichtung verbunden sein.

Das Strukturelement kann dazu konfiguriert sein, sich in einer Aufnahmebewegung in einer ersten Richtung entlang der Arbeitsachse in eine relativ zu dem Hauptkörper definierte Aufnahmeposition zu bewegen, um ein Produkt auf der Tragefläche aufzunehmen. Das Strukturelement und das Band können während der Aufnahmebewegung in der ersten Richtung entlang der Arbeitsachse unter ein Produkt geschoben werden, sodass das Produkt auf der Tragefläche aufgenommen wird.

Die Greiferanordnung kann während der Aufnahmebewegung in der ersten Konfiguration vorliegen. Das Strukturelement und das Band können bei der Aufnahmebewegung unter das Produkt geschoben werden, ohne dass das Produkt entlang der Arbeitsachse eine Bewegung ausführt.

Die erste Kante des Strukturelements kann bezüglich der ersten Richtung entlang der Arbeitsachse stromabwärts der zweiten Kante des Strukturelements vorgesehen sein. Die erste Kante kann flach und/oder mit einer sich entlang der ersten Richtung verringernden Dicke ausgebildet sein, um ein Aufnehmen des Produkts zu erleichtern.

Das Strukturelement kann dazu konfiguriert sein, sich in einer Abwurfbewegung in einer zweiten Richtung entlang der Arbeitsachse zu bewegen, um ein auf der Tragefläche aufgenommenes Produkt abzuwerfen. Die zweite Richtung kann der ersten Richtung entgegengesetzt sein.

Die Greiferanordnung kann während der Abwurfbewegung in der ersten Konfiguration sein. Wenn die Greiferanordnung während der Abwurfbewegung in der ersten Konfiguration ist, kann das Produkt durch die Abwurfbewegung über die erste Kante abgeworfen werden. Wenn die Greiferanordnung während der Abwurfbewegung in der ersten Konfiguration ist, können das Strukturelement und das Band entlang der Arbeitsachse und dem Produkt weggezogen werden, ohne dass das Produkt eine Bewegung entlang der Arbeitsachse ausführt. Hierdurch kann begünstigt werden, dass das Produkt in der Orientierung abgeworfen wird, in der es auf der Tragefläche liegt.

Die Greiferanordnung kann während der Abwurfbewegung in der zweiten Konfiguration sein. Wenn die Greiferanordnung während der Abwurfbewegung in der zweiten Konfiguration ist, kann das Produkt durch die Abwurfbewegung über die zweite Kante abgeworfen werden. Wenn die Greiferanordnung während der Abwurfbewegung in der zweiten Konfiguration ist, können das Strukturelement und das Band eine Translationsbewegung entlang der Arbeitsachse ausführen. Zugleich kann ein das Obertrum bildender Bereich des Bandes eine Relativbewegung entlang der Arbeitsachse in Bezug auf das Strukturelement ausführen. Das Produkt kann durch die Relativbewegung zwischen dem das Obertrum bildenden Bereich des Bandes und dem Strukturelement seine Position auf dem Strukturelement entlang der Arbeitsachse ändern, also gewissermaßen auf dem Strukturelement entlang der Arbeitsachse gefördert werden. Das Produkt kann insbesondere über die zweite Kante hinaus gefördert und so von der Tragefläche abgeworfen werden. Wenn die Greiferanordnung während der Abwurfbewegung in der zweiten Konfiguration ist, kann dem Produkt eine Geschwindigkeit entlang der Arbeitsrichtung aufgeprägt werden. Die Geschwindigkeit kann insbesondere parallel zu der zweiten Richtung entlang der Arbeitsrichtung sein. Eine Geschwindigkeit entlang der zweiten Richtung begünstigt bei einem Hinausfördern des Produkts über die zweite Kante eine Tendenz des Produkts sich um seine eigene Achse zu drehen, insbesondere um eine horizontale Achse des Produkts. Hierdurch kann beim Abwerfen des Produkts eine Orientierung des Produkts verändert werden. Zum Beispiel kann erreicht werden, dass das Produkt während und/oder nach dem Verlassen der Tragefläche eine Drehung ausführt und um einen gewünschten Winkel, insbesondere um im Wesentlichen 180 Grad, gedreht auf einer Aufnahmefläche aufkommt.

Die Greiferanordnung kann dazu konfiguriert sein, während der Abwurfbewegung wahlweise in der ersten Konfiguration oder in der zweiten Konfiguration vorzuliegen. Die Greiferanordnung kann dazu konfiguriert sein, während der Abwurfbewegung in der ersten Konfiguration vorzuliegen, wenn das Produkt ohne Drehung des Produkts abgeworfen werden soll. Die Greiferanordnung kann dazu konfiguriert sein, während der Abwurfbewegung in der zweiten Konfiguration vorzuliegen, wenn das Produkt mit Drehung abgeworfen werden soll.

Die Greiferanordnung kann dazu konfiguriert sein, das Strukturelement bei einer Abwurfbewegung, bei welcher die Greiferanordnung in der ersten Konfiguration vorliegt, mit einer ersten Geschwindigkeit zu bewegen. Die Greiferanordnung kann dazu konfiguriert sein, das Strukturelement bei einer Abwurfbewegung, bei welcher die Greiferanordnung in der zweiten Konfiguration vorliegt, mit einer zweiten Geschwindigkeit zu bewegen. Die erste Geschwindigkeit kann größer als die zweite Geschwindigkeit sein. Eine schnelle Bewegung des Strukturelements kann ein Abwerfen des Produkts ohne Drehung begünstigen. Eine langsame Bewegung des Strukturelements kann eine Drehung des Produkts beim Abwerfen begünstigen. Wenn das Produkt langsam über die zweite Kante hinausgefördert wird, kann ein Teil des Produkts, der bereits die zweite Kante passiert hat, nach unten hängen und so eine Drehung des Produkts einleiten.

Die zweite Geschwindigkeit kann weniger als 80 Prozent, oder weniger als 60 Prozent, oder weniger als 50 Prozent, oder weniger als 40 Prozent, oder weniger als 20 Prozent der ersten Geschwindigkeit betragen.

Die Greiferanordnung kann ein Führungselement umfassen. Die zweite Kante kann entlang der Arbeitsachse zwischen dem Führungselement und der ersten Kante vorgesehen sein. Bei einem Abwurf des Produkts über die zweite Kante kann das Führungselement durch Kontakt mit dem Produkt eine Fallbewegung des Produkts beeinflussen. Das Führungselement kann dazu konfiguriert sein, eine Drehung des Produkts während der Fallbewegung des Produkts zu unterstützen und/oder zu führen. Das Führungselement kann sich zumindest im Wesentlichen parallel zu der ersten Kante und/oder zu der zweiten Kante erstrecken. Das Führungselement kann zumindest im Wesentlichen einen U-förmigen Querschnitt aufweisen. Das Führungselement kann als Führungsblech ausgebildet sein. Das Führungselement kann bezüglich des Hauptkörpers ortsfest sein. Das Führungselement kann an dem Hauptkörper angebracht sein.

Gemäß einem zweiten Aspekt der Erfindung wird ein System zum Handhaben von Produkten bereitgestellt. Das System umfasst eine Greiferanordnung gemäß dem ersten Aspekt der Erfindung. Zudem umfasst das System eine Übergabefläche zum Bereitstellen von Produkten und eine Aufnahmefläche zum Empfangen von Produkten. Die Greiferanordnung kann dazu konfiguriert sein, Produkte von der Übergabefläche aufzunehmen und auf die Aufnahmefläche abzuwerfen.

Das System kann eine Steuereinrichtung umfassen. Die Steuereinrichtung kann dazu konfiguriert sein, zu bestimmen, ob ein auf der Tragefläche der Greiferanordnung aufgenommenes Produkt mit oder ohne Drehung abgeworfen werden soll. Die Steuereinrichtung kann dazu konfiguriert sein, die Greiferanordnung dazu anzusteuern, die Abwurfbewegung in der ersten Konfiguration durchzuführen, wenn bestimmt wurde, dass das Produkt ohne Drehung abgeworfen werden soll. Die Steuereinrichtung kann dazu konfiguriert sein, die Greiferanordnung dazu anzusteuern, die Abwurfbewegung in der zweiten Konfiguration durchzuführen, wenn bestimmt wurde, dass das Produkt mit Drehung abgeworfen werden soll.

Das System kann eine Robotereinrichtung umfassen. Die Greiferanordnung kann an der Robotereinrichtung angebracht sein. Die Robotereinrichtung kann dazu konfiguriert sein, die Greiferanordnung zu bewegen, insbesondere durch eine translatorische Bewegung zu bewegen. Die Robotereinrichtung kann dazu konfiguriert sein, die Greiferanordnung an einen Aufnahmeort zu bewegen, wo ein Produkt von der Übergabefläche aufgenommen wird. Die Robotereinrichtung kann dazu konfiguriert sein, die Greiferanordnung an einen Abgabeort zu bewegen, wo das Produkt von der Tragefläche auf die Aufnahme abgeworfen wird.

Gemäß einem dritten Aspekt der Erfindung wird eine Verwendung der Greiferanordnung des ersten Aspekts oder des Systems des zweiten Aspekts bereitgestellt. Die Greiferanordnung oder das System wird verwendet, um ein auf der Tragefläche aufgenommenes Produkt situationsabhängig wahlweise derart auf eine Aufnahmefläche abzuwerfen, dass eine Drehlage des Produkts um eine horizontale Achse während des Abwurfs im Wesentlichen gleich bleibt, oder derart abzuwerfen, dass sich eine Drehlage des Produkts um die horizontale Achse während des Abwurfs um im Wesentlichen 180 Grad ändert.

Die horizontale Achse kann eine in Bezug auf das Produkt definierte Achse sein. Die horizontale Achse kann eine eigene Achse des Produkts sein.

Gemäß einem vierten Aspekt der Erfindung wird ein Verfahren zum Transport von Produkten mit einer Greiferanordnung bereitgestellt. Die Greiferanordnung umfasst ein Strukturelement und ein Band. Das Band erstreckt sich zumindest um eine erste Kante des Strukturelements und bildet so ein Obertrum. Das Obertrum stellt eine Tragefläche zur Aufnahme eines Produkts bereit. Ein Bereich des Bandes wird von einer Halteeinrichtung der Greiferanordnung festgehalten. Durch Bewegen des Strukturelements entlang einer bezüglich einem Hauptkörper der Greiferanordnung definierten Arbeitsachse in einer ersten Richtung in eine Aufnahmeposition wird eine Aufnahmebewegung durchgeführt. Das Band läuft bei der Aufnahmebewegung um die erste Kante um und wird unter ein Produkt geschoben, sodass das Produkt auf der durch das Obertrum gebildeten Tragefläche aufgenommen wird. Es wird bestimmt, ob das Produkt ohne Drehung oder mit einer Drehung abgeworfen werden soll. Durch Bewegen des Strukturelements aus der Aufnahmeposition entlang der Arbeitsachse in einer der ersten Richtung entgegengesetzten zweiten Richtung wird eine Abwurfbewegung durchgeführt. Bei der Abwurfbewegung läuft das Band um die erste Kante um. Bei der Abwurfbewegung wird das Produkt von der durch das Obertrum gebildeten Tragefläche auf eine Aufnahmefläche abgeworfen. Wenn bestimmt wurde, dass das Produkt ohne Drehung abgeworfen werden soll, wird das Strukturelement bei der Abwurfbewegung mit einer ersten Geschwindigkeit in die zweite Richtung bewegt. Wenn bestimmt wurde, dass das Produkt mit einer Drehung abgeworfen werden soll, wird das Strukturelement bei der Abwurfbewegung mit einer zweiten Geschwindigkeit in die zweite Richtung bewegt. Die zweite Geschwindigkeit ist geringer als die erste Geschwindigkeit.

Eine Bewegung des Strukturelements mit der größeren ersten Geschwindigkeit kann ein Abwerfen des Produkts ohne Drehung begünstigen. Eine Bewegung des Strukturelements mit der kleineren zweiten Geschwindigkeit kann eine Drehung des Produkts beim Abwerfen begünstigen.

Die zweite Geschwindigkeit kann weniger als 80 Prozent, oder weniger als 60 Prozent, oder weniger als 50 Prozent, oder weniger als 40 Prozent, oder weniger als 20 Prozent der ersten Geschwindigkeit betragen.

Ein Abwerfen des Produkts ohne Drehung kann ein Abwerfen des Produkts in der Orientierung umfassen, in der das Produkt auf der Tragefläche der Greiferanordnung lag.

Ein Abwerfen des Produkts mit einer Drehung kann umfassen, dass das Produkt während des Abwerfens eine Drehung um eine eigene Achse des Produkts ausführt. Die eigene Achse des Produkts kann eine horizontale Achse sein. Das Produkt kann sich bei einem Abwerfen mit Drehung während des Abwerfens derart drehen, dass das Produkt in einer gegenüber einer Orientierung, in welcher das Produkt auf der Tragefläche der Greiferanordnung lag, um 180 Grad gedrehten Orientierung auf einer Aufnahmefläche zu liegen kommt.

Das Produkt kann eine erste Produktseite und eine der ersten Produktseite gegenüberliegende zweite Produktseite aufweisen. Wenn ein mit der ersten Produktseite nach unten auf der Tragefläche liegendes Produkt ohne Drehung abgeworfen wird, kann das Produkt mit der ersten Produktseite nach unten auf der Aufnahmefläche zu liegen kommen. Wenn ein mit der ersten Produktseite nach unten auf der Tragefläche liegendes Produkt mit Drehung abgeworfen wird, kann das Produkt mit der zweiten Produktseite nach unten auf der Aufnahmefläche zu liegen kommen.

Bei dem Produkt kann es sich um ein Lebensmittelprodukt handeln. Bei dem Produkt kann es sich beispielweise um ein Fischfilet handeln. Eine von der ersten Produktseite und der zweiten Produktseite kann zumindest überwiegend von einer Haut gebildet sein und die andere von der ersten Produktseite und der zweiten Produktseite kann zumindest überwiegend von Fleisch gebildet sein.

Das Bestimmen, ob das Produkt ohne Drehung oder mit einer Drehung abgeworfen werden soll, kann derart erfolgen, dass das Produkt derart auf ein bereits auf der Aufnahmefläche befindliches Produkt abgeworfen wird, dass zwei gleiche Produktseiten aufeinander zu gerichtet zu liegen kommen. So kann beispielweise vermieden werden, dass eine Hautseite eines Fischfilets auf einer Fleischseite eines darunterliegenden Fischfilets zum Liegen kommt und die Fleischseite somit verunreinigt werden könnte.

Die Greiferanordnung kann nach der Aufnahmebewegung durch eine Translationsbewegung der Greiferanordnung an eine Abgabeposition verfahren werden. Die Abgabeposition kann über einer Aufnahmefläche zur Aufnahme des Produkts liegen. Die Abgabeposition kann abhängig davon gewählt werden, ob das Produkt ohne Drehung oder mit einer Drehung abgeworfen werden soll.

Wenn bestimmt wurde, dass das Produkt ohne Drehung abgeworfen werden soll, kann die Greiferanordnung auf eine erste Höhe über der Aufnahmefläche bewegt werden. Wenn bestimmt wurde, dass das Produkt mit einer Drehung abgeworfen werden soll, kann das Produkt auf eine zweite Höhe über der Aufnahmefläche bewegt werden. Die zweite Höhe kann größer als die erste Höhe sein. Eine größerer Abwurfhöhe kann eine Drehung des Produkts beim Abwurf begünstigen. Eine geringere Abwurfhöhe kann ein Abwerfen des Produkts ohne Drehung begünstigen.

Gemäß einer Ausführungsform kann das Produkt unabhängig davon, ob bestimmt wurde, dass das Produkt ohne Drehung oder mit einer Drehung abgeworfen werden soll, über die erste Kante abgeworfen werden. Die erste Kante kann die Kante sein, über welche das Produkt bei der Aufnahmebewegung auf die Tragefläche gelangt.

Das Band kann sich zudem um eine zweite Kante des Strukturelements erstrecken. Das Produkt kann über die erste Kante abgeworfen werden, wenn bestimmt wurde, dass das Produkt ohne Drehung abgeworfen werden soll. Das Produkt kann über die zweite Kante abgeworfen werden, wenn bestimmt wurde, dass das Produkt mit einer Drehung abgeworfen werden soll.

Die zweite Kante kann sich parallel zu der ersten Kante erstrecken. Die erste Kante kann bezüglich der ersten Richtung entlang der Arbeitsachse stromabwärts der zweiten Kante liegen. Die erste Kante und/oder die zweite Kante können sich senkrecht zur Arbeitsachse erstrecken.

Ein das Obertrum bildender Bereich des Bandes kann bei der Abwurfbewegung keine Bewegung entlang der Arbeitsachse ausführen, wenn bestimmt wurde, dass das Produkt ohne Drehung abgeworfen werden soll. Der das Obertrum bildende Bereich des Bandes kann bei der Abwurfbewegung eine Bewegung entlang der Arbeitsachse ausführen, wenn bestimmt wurde, dass das Produkt mit einer Drehung abgeworfen werden soll.

Merkmale, Erläuterungen und Ausführungen, welche in Bezug auf einen der Aspekte der Erfindung beschrieben wurden, können auf jeden anderen der Aspekte der Erfindung übertragen oder mit jedem anderen der Aspekte kombiniert werden. Die Greiferanordnung und das System können zum Durchführen des Verfahrens oder zum Durchführen der Verwendung geeignet, ausgelegt und/oder konfiguriert sein. Das Verfahren und die Verwendung können anhand der Greiferanordnung oder anhand des Systems durchgeführt werden.

Im Folgenden wird die Erfindung anhand von Ausführungsformen mit Hilfe der Figuren weiter erläutert.
Fig. 1 zeigt eine schematische Darstellung eines Systems mit einer Greiferanordnung gemäß einer Ausführungsform vor dem Aufnehmen eines Produkts.
Fig. 2 zeigt eine schematische Darstellung der Greiferanordnung nach dem Aufnehmen des Produkts.
Fig. 3 zeigt eine schematische Darstellung der Greiferanordnung beim Abwerfen des Produkts ohne Drehung.
Fig. 4 zeigt eine schematische Darstellung der Greiferanordnung beim Abwerfen des Produkts mit Drehung gemäß einer ersten Erfindungsvariante.

Die Figuren 5 bis 7 zeigen eine Abfolge beim Abwerfen des Produkts mit Drehung gemäß einer zweiten Erfindungsvariante.

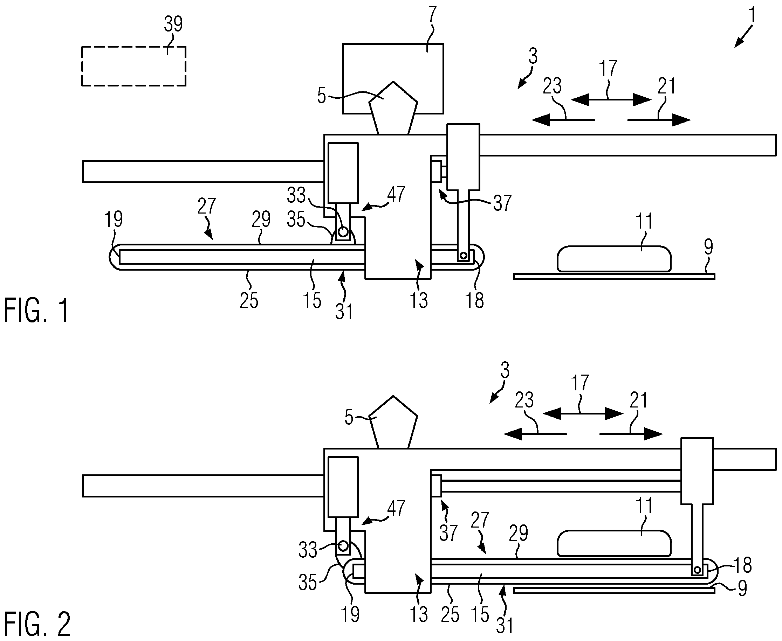

Figur 1 zeigt eine schematische Darstellung eines Systems 1 mit einer Greiferanordnung 3, welche eine Kopplungseinrichtung 5 aufweist. Die Greiferanordnung 3 ist mittels der Kopplungseinrichtung 5 an einer Robotereinrichtung 7 angebracht. Die Robotereinrichtung 7 ist dazu konfiguriert, die Greiferanordnung 3 in einer translatorischen Bewegung im Raum zu bewegen.

Figur 1 zeigt eine Situation bevor die Greiferanordnung 3 ein auf einer Übergabefläche 9 liegendes Produkt 11 aufnimmt. Die Greiferanordnung 3 umfasst einen Hauptkörper 13, an welchem die Kopplungseinrichtung 5 befestigt ist. Die Greiferanordnung 3 umfasst zudem ein Strukturelement 15, welches in der dargestellten Ausführungsform als Platte ausgebildet ist. Das Strukturelement 15 ist für eine Bewegung entlang einer Arbeitsachse 17 an dem Hauptkörper 13 geführt. Das Strukturelement 15 umfasst eine erste Kante 18 und eine zweite Kante 19. Bezüglich einer ersten Richtung 21, welche sich entlang der Arbeitsachse 17 erstreckt, ist die erste Kante 18 der zweiten Kante 19 nachgeordnet oder stromabwärts der zweiten Kante 19 vorgesehen. Bezüglich einer der ersten Richtung 21 entgegengesetzten zweiten Richtung 23, welche sich ebenfalls entlang der Arbeitsachse 17 erstreckt, ist die zweite Kante 19 der ersten Kante 18 nachgeordnet oder liegt stromabwärts der ersten Kante 18.

Die Greiferanordnung 3 umfasst ein Band 25, welches um die erste Kante 18 und die zweite Kante 19 umläuft. Das Band 25 bildet ein Obertrum 27, welches eine Aufnahmefläche 29 für das Produkt 11 bereitstellt. Zudem bildet das Band 25 ein Untertrum 31. Das Obertrum 27 und das Untertrum 31 erstrecken sich parallel zueinander.

Die Greiferanordnung 3 umfasst eine Halteeinrichtung 33. In der dargestellten Ausführungsform umfasst die Halteeinrichtung 33 eine Stange, welche sich senkrecht zu der Arbeitsachse 17 in einer horizontalen Ebene erstreckt. Die Halteeinrichtung 33 hält einen Bereich des Bandes 25 in Bezug auf den Hauptkörper 13 fest. In der dargestellten Ausführungsform ist das Band 25 mit einer Schlaufe 35 an der Stange der Halteeinrichtung 33 befestigt.

Die Greiferanordnung 3 umfasst eine Strukturelementsantrieb 37. Der Strukturelementsantrieb 37 ist dazu konfiguriert, das Strukturelement 15 entlang der Arbeitsachse 17 zu bewegen.

Das System 1 umfasst eine Steuereinrichtung 39, welche zum Steuern der Greiferanordnung 3 konfiguriert ist. Die Steuereinrichtung 39 kann Teil der Greiferanordnung 3 sein oder extern zu der Greiferanordnung 3 vorgesehen sein. Die Steuereinrichtung 39 kann eine Steuereinrichtung eines übergeordneten Systems sein. Die Steuereinrichtung 39 kann eine Steuereinrichtung der Robotereinrichtung 7 sein.

In den in den Figuren 1 bis 4 dargestellten Betriebssituationen hält die Halteeinrichtung 33 einen Bereich des Obertrums 27 fest. Dies führt dazu, dass die Greifereinrichtung 3 in einer ersten Konfiguration ist. In der ersten Konfiguration führt ein das Obertrum 27 bildender Bereich des Bandes 25 bei einer Bewegung des Strukturelements 15 entlang der Arbeitsachse 17 keine Bewegung entlang der Arbeitsachse 17 aus. Ein das Untertrum 31 bildender Bereich des Bandes 25 hingegen führt in der ersten Konfiguration bei einer Bewegung des Strukturelements 15 entlang der Arbeitsachse 17 eine Bewegung entlang der Arbeitsachse 17 aus.

Um aus der in Figur 1 dargestellten Situation heraus das Produkt 11 auf der Tragefläche 29 aufzunehmen, wird das Strukturelement 15 mittels des Strukturelementsantriebs 37 in der ersten Richtung 21 entlang der Arbeitsachse 17 bewegt, wodurch somit das Strukturelement 15 und das Band 25 unter das Produkt 11 geschoben werden. Dies erfolgt ohne Gleitbewegung des Produkts 11 auf dem Band 25. Die resultierende Situation, in der das Produkt 11 auf der Tragefläche 29 aufgenommen ist, ist in Figur 2 dargestellt.

Nach Aufnahme des Produkts 11 verfährt die Robotereinrichtung 7 die Greiferanordnung 3 an eine Abgabeposition, um das Produkt 11 anschließend auf eine Aufnahmefläche 41 abzuwerfen.

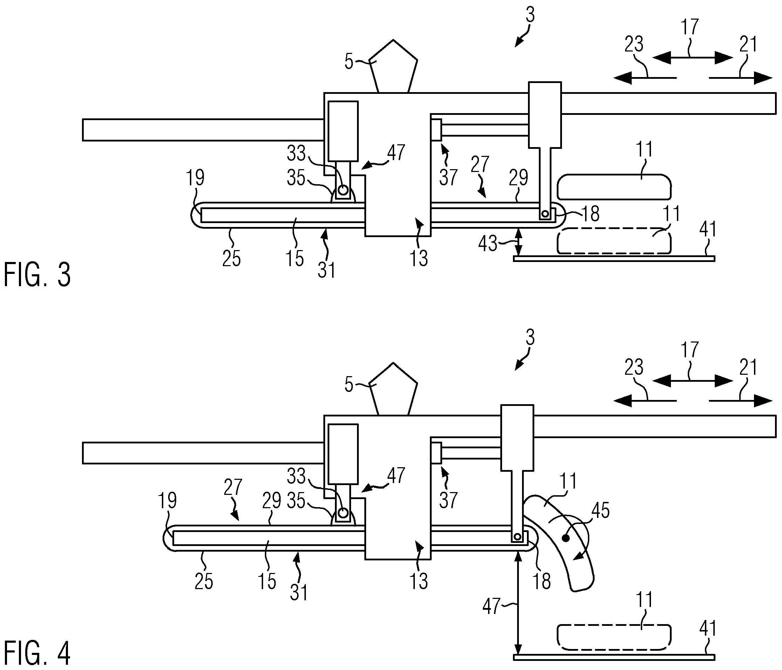

Figur 3 zeigt die Situation, dass das Produkt 11 ohne Drehung auf die Aufnahmefläche 41 abgeworfen werden soll. Die Greiferanordnung 3 wurde auf eine erste Höhe 43 über der Aufnahmefläche 41 verfahren. Anschließend wird das Strukturelement 15 mit einer ersten Geschwindigkeit in der zweiten Richtung 23 entlang der Arbeitsachse 17 verfahren, sodass das Strukturelement 15 und das Band 25 unter dem Produkt 11 weggezogen werden. Das Produkt 11 fällt dann auf die Aufnahmefläche 41. Auf der Aufnahmefläche 41 liegt das Produkt 11 zumindest im Wesentlichen in derselben Orientierung vor, wie das Produkt 11 auf der Tragefläche 29 aufgenommen war, wie in Figur 3 gestrichelt dargestellt ist.

Wenn das Produkt 11 hingegen gegenüber der Orientierung des Produkts 11 auf der Tragefläche 29 um 180 Grad um eine horizontale Achse 45 des Produkts 11 gedreht abgeworfen werden soll, wird die Abwurfbewegung auf eine andere Art und Weise ausgeführt. Hierzu werden zwei Erfindungsvarianten beschrieben.

Das Abwerfen des Produkts 11 mit Drehung gemäß einer ersten Erfindungsvariante wird anhand von Figur 4 beschrieben. In der ersten Erfindungsvariante wird die Greiferanordnung 3 zum Abwerfen des Produkts 11 mit Drehung um die Achse 45 des Produkts 11 in eine Abgabeposition verfahren, in welcher die Greiferanordnung 3 auf einer zweiten Höhe 47 über der Aufnahmefläche 41 vorliegt. Anschließend wird das Strukturelement 15 in der zweiten Richtung 23 entlang der Arbeitsachse 17 mit einer zweiten Geschwindigkeit verfahren, sodass das Strukturelement 15 und das Band 25 gewissermaßen unter dem Produkt 11 weggezogen werden. Die zweite Geschwindigkeit ist kleiner als die erste Geschwindigkeit. Eine kleinere Geschwindigkeit begünstigt eine Drehung des Produkts 11 um die Achse 45 des Produkts 11, während das Produkt 11 nach unten auf die Aufnahmefläche 41 fällt. Die zweite Höhe 47 ist größer als die erste Höhe 43. Eine größere Fallhöhe begünstigt eine Drehung des Produkts 11 um die Achse 45 des Produkts 11 während des Falls auf die Aufnahmefläche 41. Wie in Figur 4 gestrichelt dargestellt, kommt das Produkt 11 auf der Aufnahmefläche 41 in einer Orientierung zu liegen, welche gegenüber der Orientierung, in welcher das Produkt 11 auf der Aufnahmefläche 29 vorlag, um 180 Grad gedreht ist.

Sowohl in der ersten Erfindungsvariante als auch in der nachfolgend beschriebenen zweiten Erfindungsvariante liegt die Greiferanordnung 3 beim Aufnehmen des Produkts 11 (Übergang der Figuren 1 und 2) und beim Abwerfen des Produkts 11 ohne Drehung (Figur 3) in der ersten Konfiguration vor, in welcher das Obertrum 27 von der Halteeinrichtung 33 gehalten wird. In der ersten Erfindungsvariante liegt die Greiferanordnung 3 auch beim Abwurf des Produkts 11 mit Drehung um die Achse 45 des Produkts 11 in der ersten Konfiguration vor (Figur 4). In der ersten Erfindungsvariante kann die Halteeinrichtung 33 fest an dem Hauptkörper 13 der Greiferanordnung 3 angebracht sein.

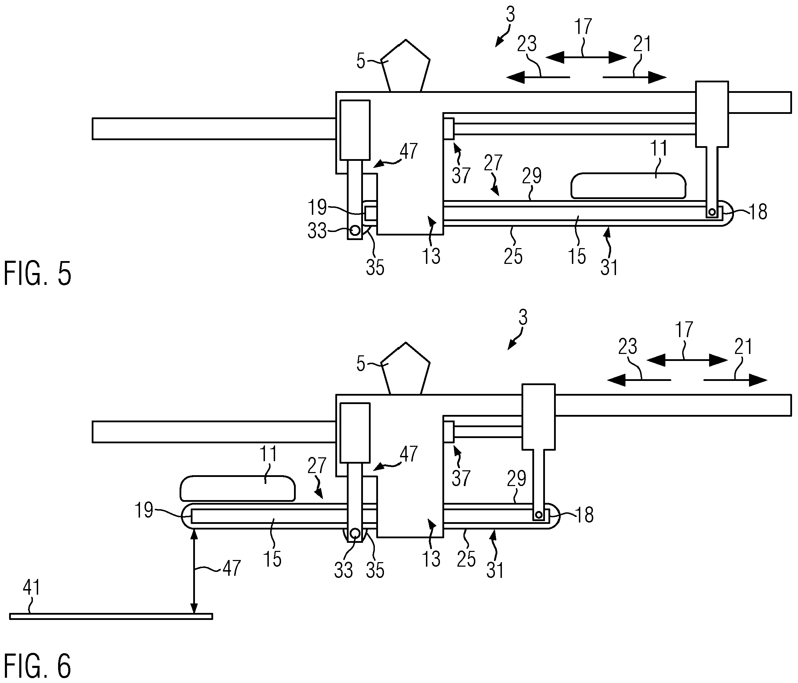

Das Aufnehmen des Produkts 11 und ein Abwerfen des Produkts 11 ohne Drehung erfolgen in der zweiten Erfindungsvariante genauso wie in der ersten Erfindungsvariante. Das Abwerfen des Produkts 11 mit Drehung um die Achse 45 des Produkts 11 erfolgt in der zweiten Erfindungsvariante aber anders als in der ersten Erfindungsvariante. Dies wird mit Bezug auf die Figuren 5 bis 7 beschrieben.

In der zweiten Erfindungsvariante kann die Halteeinrichtung 33 verstellt werden, sodass die Halteeinrichtung 33 das Untertrum 31 festhält. Dies erfolgt durch ein Verfahren der Halteeinrichtung 33 entlang einer vertikalen Richtung nach unten durch einen Halteeinrichtungsantrieb 47, welcher zum Beispiel als Pneumatikzylinder ausgebildet sein kann.

Wenn das Produkt 11 mit einer Drehung um die Achse 45 des Produkts 11 abgeworfen werden soll, wird in der zweiten Erfindungsvariante nach dem Aufnehmen des Produkts 11 die Greiferanordnung 3 durch Verfahren der Halteeinrichtung 33 in die zweite Konfiguration gebracht, in welcher die Halteeinrichtung 33 das Untertrum 31 festhält. Der resultierende Zustand ist in Figur 5 dargestellt. Da in der zweiten Konfiguration das Untertrum 31 von der Halteeinrichtung 33 festgehalten wird, führt eine Bewegung des Strukturelements 15 entlang der Arbeitsachse 17 in der zweiten Konfiguration nicht zu einer Bewegung eines das Untertrum 31 bildenden Bereichs des Bandes 25 entlang der Arbeitsachse 17. Ein das Obertrum 27 bildender Bereich des Bands 25 führt in der zweiten Konfiguration bei einer Bewegung des Strukturelements 15 entlang der Arbeitsachse 17 hingegen eine Bewegung entlang der Arbeitsachse 17 aus.

In der zweiten Erfindungsvariante wird zum Abwerfen des Produkts 11 mit einer Drehung um die Achse 45 des Produkts 11 das Strukturelement 15 mit der zweiten Geschwindigkeit in der zweiten Richtung 23 entlang der Arbeitsachse 17 bewegt, während sich die Greiferanordnung 3 in der zweiten Konfiguration befindet. Hierdurch bewegt sich das Produkt 11 sowohl bezüglich des Hauptkörpers 13 als auch bezüglich des Strukturelements 15 in der zweiten Richtung 23 entlang der Arbeitsachse 17. Optional kann das Bewegen des Strukturelements 15 in der zweiten Richtung 23 zumindest zum Teil erfolgen, während die Greiferanordnung 3 in die Abgabeposition verfahren wird.

In Figur 6 ist die Greiferanordnung 3 in der Abgabeposition auf der zweiten Höhe 47 über der Aufnahmefläche 41 vorgesehen und das Produkt 11 hat bereits die zweite Kante 19 des Strukturelements 15 erreicht.

Aus der in Figur 6 dargestellten Situation heraus wird das Strukturelement 15 weiter in der zweiten Richtung 23 entlang der Arbeitsachse 17 bewegt, sodass das Produkt 11 über die zweite Kante 19 des Strukturelements 15 hinausgefördert wird. Aufgrund der Bewegung des das Obertrum 27 bildenden Bereichs des Bands 25 weist das Produkt 11 eine Geschwindigkeit in der zweiten Richtung 23 entlang der Arbeitsachse 17 auf, wenn es über die zweite Kante 19 gefördert wird. Dies begünstigt eine Drehung des Produkts 11 um die Achse 45 des Produkts 11. Vorzugsweise wird die Bewegung des Strukturelements 15 in der zweiten Richtung 23 entlang der Arbeitsachse 17 fortgesetzt, wenn das Produkt 11 bereits zumindest teilweise über die zweite Kante 19 nach unten hängt. Hierdurch erhält das Produkt 11 während des Falls auf die Aufnahmefläche 41 einen Drall, welcher eine Drehung des Produkts 11 um die Achse 45 des Produkts 11 begünstigt.

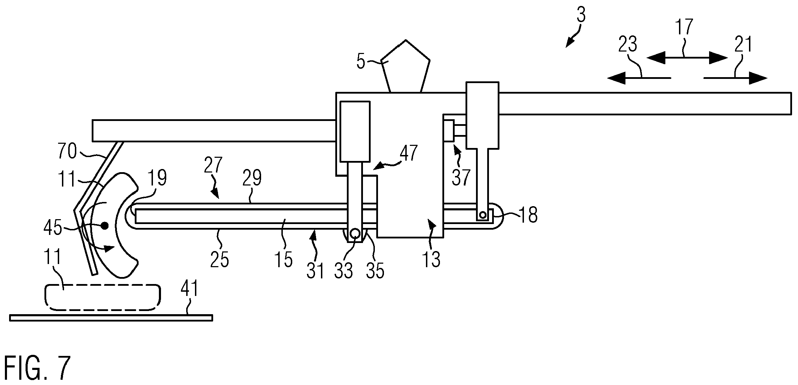

Das Produkt 11 kommt auf der Aufnahmefläche 41 in einer gegenüber der Orientierung, in welcher das Produkt 11 auf der Tragefläche 29 vorlag, um 180 Grad gedrehten Orientierung zu liegen, wie in Figur 7 gestrichelt dargestellt ist.

Wie in Figur 7 dargestellt, kann die Greiferanordnung 3 ein Führungselement 70 umfassen, welches durch Kontakt mit dem Produkt 11 eine Fallbewegung des Produkts 11 bei einem Abwurf des Produkts 11 über die zweite Kante 19 beeinflusst und eine Drehung des Produkts 11 begünstigt.

## Patentansprüche

1. Greiferanordnung (3), umfassend:
einen Hauptkörper (13);
eine Halteeinrichtung (33);
ein Strukturelement (15), welches eine erste Kante (18) und eine zweite Kante (19) aufweist; und
ein Band (25), welches sich um die erste Kante (18) und die zweite Kante (19) herum erstreckt und so ein Obertrum (27) bildet, welches eine Tragefläche (29) zur Aufnahme eines Produkts (11) bereitstellt;
wobei das Strukturelement (15) an dem Hauptkörper (15) entlang einer relativ zu dem Hauptkörper (15) definierten Arbeitsachse (17) beweglich angebracht ist;
wobei die Halteeinrichtung (33) dazu konfiguriert ist, einen Bereich des Bandes (25) festzuhalten, so dass eine Bewegung des Strukturelements (15) entlang der Arbeitsachse (17) zu einem Umlaufen des Bandes (25) um die erste Kante (18) und die zweite Kante (19) führt;
wobei die Greiferanordnung (3) dazu konfiguriert ist, in eine erste Konfiguration gebracht zu werden, in welcher bei einer Bewegung des Strukturelements (15) entlang der Arbeitsachse (17) ein das Obertrum (27) bildender Bereich des Bandes (25) keine Bewegung entlang der Arbeitsachse (17) ausführt; und
wobei die Greiferanordnung (3) dazu konfiguriert ist, in eine zweite Konfiguration gebracht zu werden, in welcher bei einer Bewegung des Strukturelements (15) entlang der Arbeitsachse (17) ein das Obertrum (27) bildender Bereich des Bandes (25) eine Bewegung entlang der Arbeitsachse (17) ausführt.

2. Greiferanordnung nach Anspruch 1, wobei die Halteeinrichtung (33) dazu konfiguriert ist, in der ersten Konfiguration einen Bereich des Obertrums (27) festzuhalten.

3. Greiferanordnung nach Anspruch 1 oder 2, wobei die Halteeinrichtung (33) dazu konfiguriert ist, in der zweiten Konfiguration einen Bereich eines Untertrums (31) des Bandes (25) festzuhalten.

4. Greiferanordnung nach einem der vorangehenden Ansprüche, wobei die Halteeinrichtung (33) an dem Hauptkörper (13) zwischen einer ersten Halteposition und einer zweiten Halteposition verstellbar angebracht ist, und wobei die Greiferanordnung (3) durch Verstellen der Halteeinrichtung (33) zwischen der ersten Halteposition und der zweiten Halteposition zwischen der ersten Konfiguration und der zweiten Konfiguration verstellbar ist.

5. Greiferanordnung nach einem der vorangehenden Ansprüche, wobei das Strukturelement (15) dazu konfiguriert ist, sich in einer Aufnahmebewegung in einer ersten Richtung (21) entlang der Arbeitsachse (17) in eine relativ zu dem Hauptkörper (13) definierte Aufnahmeposition zu bewegen, um ein Produkt (11) auf der Tragefläche (29) aufzunehmen, wobei die Greiferanordnung (3) während der Aufnahmebewegung vorzugsweise in der ersten Konfiguration ist.

6. Greiferanordnung nach einem der vorangehenden Ansprüche, wobei das Strukturelement (15) dazu konfiguriert ist, sich in einer Abwurfbewegung in einer zweiten Richtung (23) entlang der Arbeitsachse (17) zu bewegen, um ein auf der Tragefläche (29) aufgenommenes Produkt (11) abzuwerfen.

7. Greiferanordnung nach Anspruch 6, wobei das Produkt (11) durch die Abwurfbewegung über die erste Kante (18) abgeworfen wird, wenn die Greiferanordnung (3) während der Abwurfbewegung in der ersten Konfiguration ist, und das Produkt (11) durch die Abwurfbewegung über die zweite Kante (19) abgeworfen wird, wenn die Greiferanordnung (3) während der Abwurfbewegung in der zweiten Konfiguration ist.

8. Greiferanordnung nach einem der vorangehenden Ansprüche, wobei die Greiferanordnung (3) dazu konfiguriert ist, das Strukturelement (15) bei einer Abwurfbewegung, bei welcher die Greiferanordnung (3) in der ersten Konfiguration ist, mit einer ersten Geschwindigkeit zu bewegen, und das Strukturelement (15) bei einer Abwurfbewegung, bei welcher die Greiferanordnung (3) in der zweiten Konfiguration ist, mit einer zweiten Geschwindigkeit zu bewegen, wobei die erste Geschwindigkeit größer als die zweite Geschwindigkeit ist.

9. Greiferanordnung nach einem der vorangehenden Ansprüche, wobei die Greiferanordnung (3) zudem ein Führungselement (70) umfasst, wobei die zweite Kante (19) entlang der Arbeitsachse (17) zwischen dem Führungselement (70) und der ersten Kante (18) vorgesehen ist, und wobei das Führungselement (70) dazu konfiguriert ist, durch Kontakt mit dem Produkt (11) eine Fallbewegung des Produkts (11) bei einem Abwurf des Produkts (11) über die zweite Kante (19) zu beeinflussen.

10. Verwendung einer Greiferanordnung (3) nach einem der vorangehenden Ansprüche, um ein auf der Tragefläche (29) aufgenommenes Produkt (11) situationsabhängig wahlweise derart auf eine Aufnahmefläche (41) abzuwerfen, dass eine Drehlage des Produkts (11) um eine horizontale Achse (45) während des Abwurfs im Wesentlichen gleich bleibt, oder derart abzuwerfen, dass sich eine Drehlage des Produkts (11) um die horizontale Achse (45) während des Abwurfs um im Wesentlichen 180 Grad ändert.

11. Verfahren zum Transport von Produkten (11) mit einer Greiferanordnung (3),
wobei die Greiferanordnung (3) ein Strukturelement (15) und ein Band (25) umfasst, wobei sich das Band (25) zumindest um eine erste Kante (18) des Strukturelements (15) erstreckt und so ein Obertrum (27) bildet, welches eine Tragefläche (29) zur Aufnahme eines Produkts (11) bereitstellt;
wobei ein Bereich des Bandes (25) von einer Halteeinrichtung (33) der Greiferanordnung (3) festgehalten wird; und
wobei das Verfahren Folgendes umfasst:
Durchführen einer Aufnahmebewegung durch Bewegen des Strukturelements (15) entlang einer bezüglich einem Hauptkörper (13) der Greiferanordnung (3) definierten Arbeitsachse (17) in einer ersten Richtung (21) in eine Aufnahmeposition, wobei das Band (25) bei der Aufnahmebewegung um die erste Kante (18) umläuft und unter ein Produkt (11) geschoben wird, so dass und das Produkt (11) auf der durch das Obertrum (27) gebildeten Tragefläche (29) aufgenommen wird;
Bestimmen, ob das Produkt (11) ohne Drehung oder mit einer Drehung abgeworfen werden soll; und
Durchführen einer Abwurfbewegung durch Bewegen des Strukturelements (15) aus der Aufnahmeposition entlang der Arbeitsachse (17) in einer der ersten Richtung (18) entgegengesetzten zweiten Richtung (19), wobei das Band (25) bei der Abwurfbewegung um die erste Kante (18) umläuft und das Produkt (11) von der durch das Obertrum (27) gebildeten Tragefläche (29) auf eine Aufnahmefläche (41) abgeworfen wird;
wobei das Strukturelement (15) bei der Abwurfbewegung mit einer ersten Geschwindigkeit in die zweite Richtung (23) bewegt wird, wenn bestimmt wurde, dass das Produkt (11) ohne Drehung abgeworfen werden soll, und bei der Abwurfbewegung mit einer zweiten Geschwindigkeit in die zweite Richtung (23) bewegt wird, wenn bestimmt wurde, dass das Produkt (11) mit einer Drehung abgeworfen werden soll, wobei die zweite Geschwindigkeit geringer als die erste Geschwindigkeit ist.

12. Verfahren nach Anspruch 11, wobei die Greiferanordnung (3) auf eine erste Höhe (43) über der Aufnahmefläche (41) bewegt wird, wenn bestimmt wurde, dass das Produkt (11) ohne Drehung abgeworfen werden soll, und auf eine zweite Höhe (47) über der Aufnahmefläche (41) bewegt wird, wenn bestimmt wurde, dass das Produkt (11) mit einer Drehung abgeworfen werden soll, wobei die zweite Höhe (47) größer als die erste Höhe (43) ist.

13. Verfahren nach Anspruch 11 oder 12, wobei das Produkt (11) unabhängig davon, ob bestimmt wurde, dass das Produkt (11) ohne Drehung oder mit einer Drehung abgeworfen werden soll, über die erste Kante (18) abgeworfen wird.

14. Verfahren nach Anspruch 11 oder 12, wobei sich das Band (25) zudem um eine zweite Kante (19) des Strukturelements (15) erstreckt, wobei das Produkt (11) über die erste Kante (18) abgeworfen wird, wenn bestimmt wurde, dass das Produkt (11) ohne Drehung abgeworfen werden soll, und wobei das Produkt (11) über die zweite Kante (19) abgeworfen wird, wenn bestimmt wurde, dass das Produkt (11) mit einer Drehung abgeworfen werden soll.

15. Verfahren nach einem der Ansprüche 11 bis 14, wobei ein das Obertrum (27) bildender Bereich des Bandes (25) bei der Abwurfbewegung keine Bewegung entlang der Arbeitsachse (17) ausführt, wenn bestimmt wurde, dass das Produkt (11) ohne Drehung abgeworfen werden soll, und wobei der das Obertrum (27) bildende Bereich des Bandes (25) bei der Abwurfbewegung eine Bewegung entlang der Arbeitsachse (17) ausführt, wenn bestimmt wurde, dass das Produkt (11) mit einer Drehung abgeworfen werden soll.
